# EUROPEAN PATENT SPECIFICATION

(11) **EP 0 430 563 B1**
(45) Date of publication and mention of the grant of the patent: **16.02.1994**
(21) Application number: 90312666.2
(22) Date of filing: 21.11.1990
(51) Int. Cl.: F16B 23/00

(54) **Threaded fastener**
Befestigungselement mit Gewinde
Elément de fixation avec filet

(30) Priority: 22.11.1989 JP 303961/89; 29.06.1990 JP 69521/90
(43) Date of publication of application: 05.06.1991
(73) Proprietor: OSG CORPORATION, Toyokawa-Shi Aichi-Ken (JP); Yamamoto, Kozo, Kita-ku, Tokyo (JP)
(72) Inventor: Yamamoto, Kozo, Kita-Ku, Tokyo (JP)
(74) Representative: Bardo, Julian Eason

(56) References cited:
- DE-A- 2 451 373
- FR-A- 2 558 220
- US-A- 4 361 412

## Description

### BACKGROUND OF THE INVENTION

### Field of The Invention

The present invention relates generally to a threaded fastener . Specifically, the present invention relates to a threaded fastener having a portion for bit engagement therein including five or six extended portions extending in radial directions from the center thereof.

### Description of The Background Art

Generally, threaded fasteners having a portion for bit engagement in which six portions extend in radial directions therein are well known in the art as threaded fasteners having excellent resistance against large amounts of jointing force or torque.

Conventionally, a threaded fastener is composed of a head and a threaded shaft. In the head, an engaging portion, comprised of a groove or projection, is formed. The center portion of the groove or projection is circular to allow for insertion of jointing equipment to provide a center portion. Six extended portions are equally spaced around periphery of the center portion for providing radial portions, holding a bit of the jointing equipment to receive torque derived from the equipment. A typical configuration of an engaging portion has six extended portions which extend in directions radially outward from the center of the engaging portion as shown in Japanese Utility Model Second Publication (allowed) No. 48-39959.

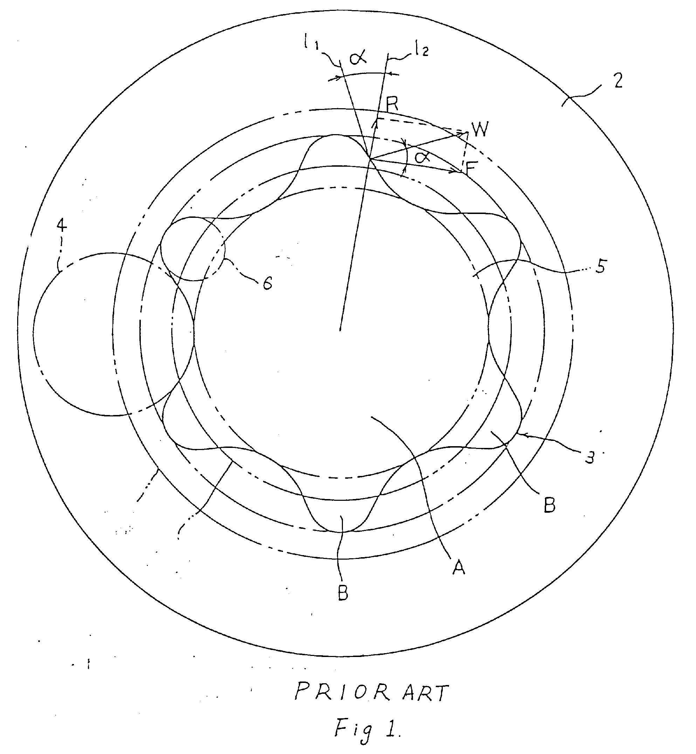

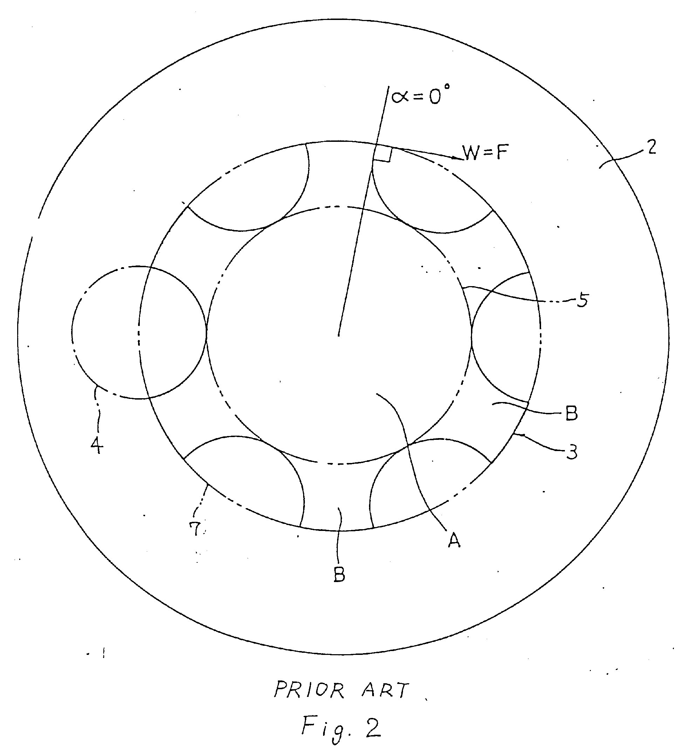

A plan view of the typical head having an engaging portion (projection or groove) such as the above cited disclosure is shown in Fig. 1. The threaded fastener is composed of a threaded shaft 1 and a head 2. In the head 2, a center portion A and radial portions B extending in radial directions are formed. The profile of a bit engaging portion 3 is determined as follows. Six dummy circles 4 are equally spaced along periphery of the circle 5 which defines the center portion A. Another six dummy circles 6 having smaller diameter than the circles 4 are spaced therebetween, respectively. The profile of the portion 3 is formed along a line via a tangent point of the circles 4 and 5, a circumference of the circle 4, and a circumference of the circle 6 which is remote from the center of the threaded fastener. This is repeated until a continuous contour forming the profile is completed. Plan view of another typical threaded fastener is also shown in Fig. 2. In this type of threaded fastener, profile of the portion 3 is determined along a line via a tangent point of the dummy circles 4 and 5, a center facing portion of the circumferences of dummy circles 4, and a circumference of a dummy circle 7 formed along a line through the centers of the circles 4.

In the type of shown in Fig. 1, when torque is applied to the bit engaging portion 3 by radial engagement of the jointing equipment, the torque converts to force W which works on the surface of the radial portion in a perpendicular direction. The force W is shared in component forces F in a direction of a tangent line of circumference of the head and R in a direction of diameter thereof. As a result, the force F is applied on the threaded fastener as a rotating driving force. This rotating driving force F is indicated as following formula;$\text{F = W cosα}$
wherein α is a driving angle defined by a tangent line l₁ of inner circumference of the radial portion B at a point of force applied and a radius line l₂ lined through that point. Therefore, corresponding to the reduction of the driving angle α, torque from the jointing equipment converts to rotating driving force F without loss. However, in this type of threaded fastener, α when becomes about 25° or so, conversion loss of torque becomes relatively larger.

In the type of shown in Fig. 2, when a point of force applied is located most remote from the torque not-transferred portion, that is where the circumference of the circle 7 meets the circumference of the circle 4, the driving angle α becomes zero, then conversion loss of torque also becomes zero. However, practically, because the engagement member of the jointing equipment is formed relatively smaller than the bit engaging portion, the point of force applied is slightly moved inward of a theoretical tangent point at which angle α becomes zero. Therefore, conversion efficiency of torque fluctuates slightly corresponding to fluctuation of the point of force applied. As a result, stable and high conversion efficiency can not be obtained according to these types of threaded fasteners. Additionally, because corners of the radial portion B are shaped having angles of 90°, corners portions tend to be fragile to stress concentration when the bit engaging portion is press-molded.

### SUMMARY OF THE INVENTION

It is therefore a principal object of the present invention to provide a threaded fastener having high conversion efficiency of torque.

It is another object of the present invention to provide a threaded fastener having stable conversion efficiency of torque.

It is a further object of the present invention to provide a threaded fastener having sufficient strength to resist stress at edge portions of the groove, even when formed by press-molding.

In order to accomplish the aforementioned and other objects, a threaded fastener is provided comprising:
a threaded shaft having an axis and an integral head, said integral head having a plurality of radius lines emanating from said axis, said plurality of radius lines being equi-angularly spaced, at an angle less than 90°, one after another about said axis;
said integral head having a center portion radially extending about said axis and a plurality of radius lines, of radial, torque receiving portions radially extending outwardly from said center portion, each of said plurality of torque receiving portions radially extending about the corresponding one of said plurality of radius lines;
said center portion being defined by a first circle having a center on said axis;
each of said torque receiving portions being partly defined by the adjacent two of second circles of the same diameter, said second circles being in contact with said first circle and equi-angularly spaced one after another, said second circles having centers disposed on a third circle which is concentric with said first circle;
each of said torque receiving portions being partly defined further by a pair of fourth circles of the same diameter disposed between said adjacent two of said second circles in contact therewith, respectively, said pair of fourth circles being in contact with said third circle and having centers;
characterised in that:
each of said torque receiving portions has and is defined by a pair of straight line sections each extending from a first point on one of said second circles to a second point on that one of said pair of fourth circles which is in contact with said one of said second circles, said first and second points being spaced from one another;
said first points of said pair of straight line sections being disposed on a first line segment interconnecting said centers of said adjacent two of said second circles;
said second points of said pair of straight line sections being disposed on a second line segment interconnecting said centers of said pair of fourth circles.

Preferably, one of the torque receiving portions is defined partly by said third circle.

Preferably, each of said pair of fourth circles has a radius (r), said second points on said second line interconnecting said centers of said fourth circles are spaced by a distance (N) (wherein N is the width of each of said torque receiving portions),
said third circle has a diameter (G), the adjacent two of said radius lines are angularly distant by two times an angle β.

Preferably, said radius (r) of each of said pair of fourth circles is defined by:$\text{N/8 ≦ r < G/2 x (1 -cosβ)}$

Said center portion and said torque receiving portions radially extending therefrom may form a recess in said integral head.

Said center portion and said torque receiving portions radially extending therefrom may form a projection on said integral head.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
Fig. 1 is a plan view of a head according to the prior art;
Fig. 2 is a plan view of another head according to the prior art;
Fig. 3 is a cross sectional view of a threaded fastener according to the present invention;
Fig. 4 is a plan view of a head according to the present invention;
Fig. 5 is an enlarged plan view of a Fig. 4;
Fig. 6 is a plan view of a variation of Fig. 5;
Fig. 7 is a plan view of a further variation (not in accordance with the invention) of Fig 5;
Fig. 8 is a plan view of a head according to the second embodiment of the present invention;
Fig. 9 is an enlarged partial view of Fig. 8; and
Fig. 10 is a plan view of a head according to the third embodiment of the present invention.

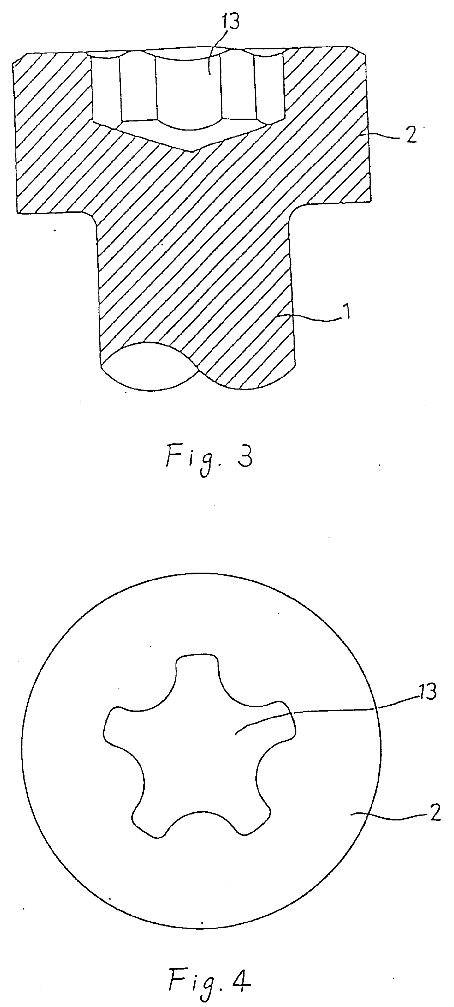

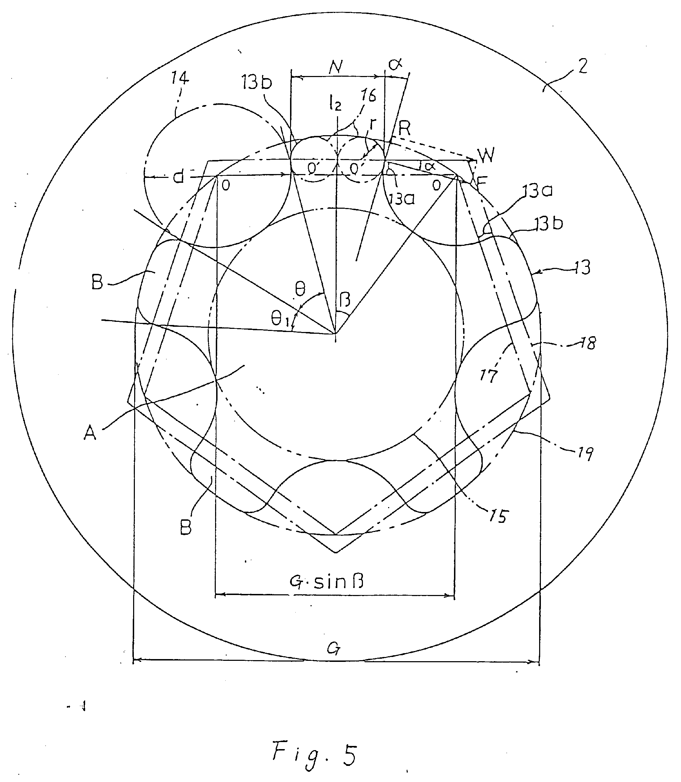

Referring now to the drawings, particularly to Figs. 3 and 4, a threaded fastener is composed of a threaded shaft 1 having helical projection around circumference thereof (thread) and a head 2 which formed integrally with the top of the threaded shaft 1. A bit engaging groove 13 is formed in the head 2 being concentrically with the threaded shaft 1. Fig. 5 is an enlarged plan view of Fig. 4. The bit engaging groove 13 is composed of a center portion A where torque derived by a jointing equipment is not transferred, and five radial portions B which are equally spaced around the periphery of the portion A being radially extending outward from the center of the threaded fastener. An extended portion of the radial portion B is formed having a straight line portion 13a which extends substantially parallel with a radius line (1₃), and a corner 13b of the portion B is formed to have rounded shape. The radial portions B are formed as follows. Five dummy circles 14 are equally spaced along the periphery of the circle 15 which defines the center portion A. Two dummy circles 16 having smaller diameter than the circle 14 are spaced therebetween being contact with the circles 14, respectively. A first pentagonal dummy line 17 is formed through the center o of each adjacent dummy circle 14, and a second pentagonal dummy line 18 is formed through the center o' of each adjacent dummy circle 16. The profile of the groove 13 is formed along a line via a tangent point of the circles 14 and 15, an inwardly facing portion of the circumference of the circle 14, the straight line 13a formed between tangent points of the first line 17 and the second line 18 respectively with the circles 14 and 16, a circumference of the circle 16 which circumference is remote from the center of the threaded fastener, a circumference of a dummy circle 19 lined through the centers of the dummy circles 14, a circumference of another dummy circle of 16 which circumference is remote from the center of the threaded fastener, and another straight line 13a formed between tangent points of the second and the first lines respectively with the circles 16 and 14. This is repeated sequentially, completing the profile of the groove 13. Therefore, extended portions of the groove 13 are formed to have a straight line portion derived from two tangent points of the line formed through the centers of the circles 14 and 16 respectively thereon, and a rounded shape derived from the circumference of the circles 16.

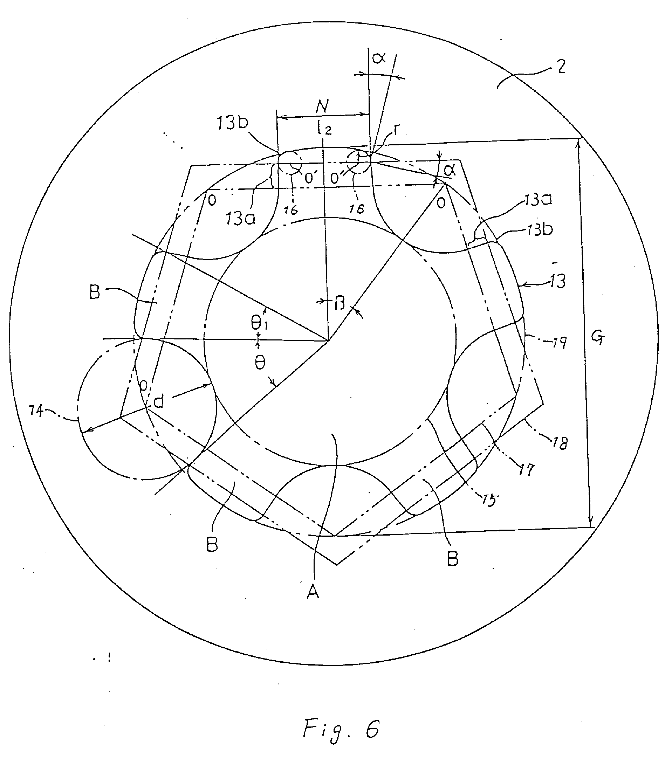

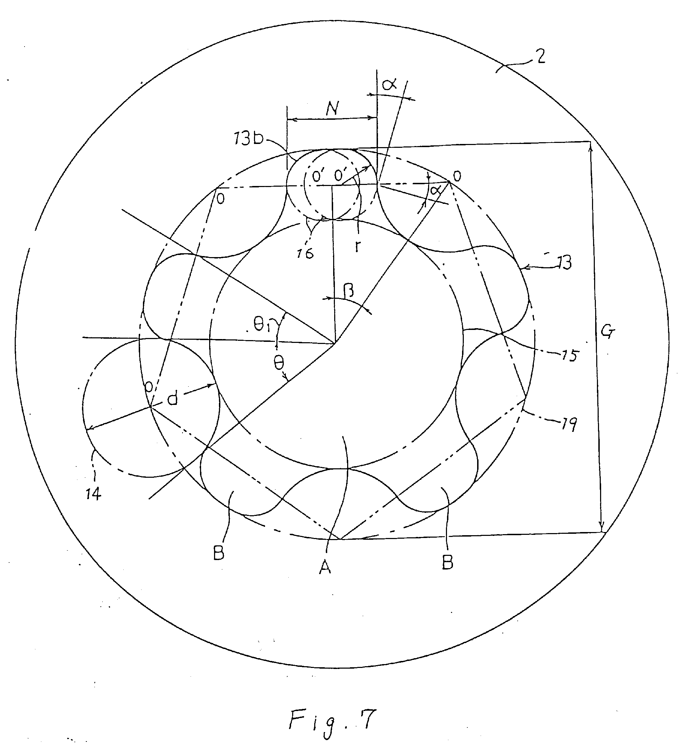

Curvature of the rounded shape of the groove 13 depends on variation of radius r of the dummy circle 16. Concurrently, the length of the straight portion 13a is also depends thereon. Fig. 6 shows the case of r = N/8 (wherein N is width of the radial portion B), and Fig. 7, which does not illustrate an embodiment of the invention, shows the case of r = G/2 x (1-cosβ) (wherein G is diameter of a circle 19 which indicates peripheral circumference of the groove 13, β is a central angle defined by lines extending between the groove center and the center of N and the center of the circle 14, respectively). When r becomes shorter than N/8, curvature of the rounded portion is not enough to establish the strength against press-molding. On the other hand, when r becomes longer or equals to G/2 x (1-cosβ), the straight portion 13a can not be obtained. Therefore, the preferred range of radius r of the dummy circle 16 is determined within the range of$\text{N/8 ≦ r < G/2 x (1-cosβ).}$

The ratio of central angle ϑ defined by the circumference of the circle 14 against central angle ϑ ₁ defined by the circumference of the circle 16 depends on diameter d of the circle 14. Sheared sections of the bit engaging groove 13 and the bit of the jointing equipment can be substantially equaled when ϑ:ϑ ₁ = 1.4: 1. This is preferred ratio because durability of the jointing equipment can be raised if the ratio is determined as this value. Central angles ϑ and β at this ratio are indicated in the following formula;$\text{ϑ = 360 °/n x 1.4/2.4}$$\text{β = 360 °/2n}$
wherein n : number of the radial portions B.

Therefore, when number of the portions B is five, ϑ = 42 ° and β= 36 °, when number of the portions B is six, ϑ = 35 ° β= 30 °, etc.

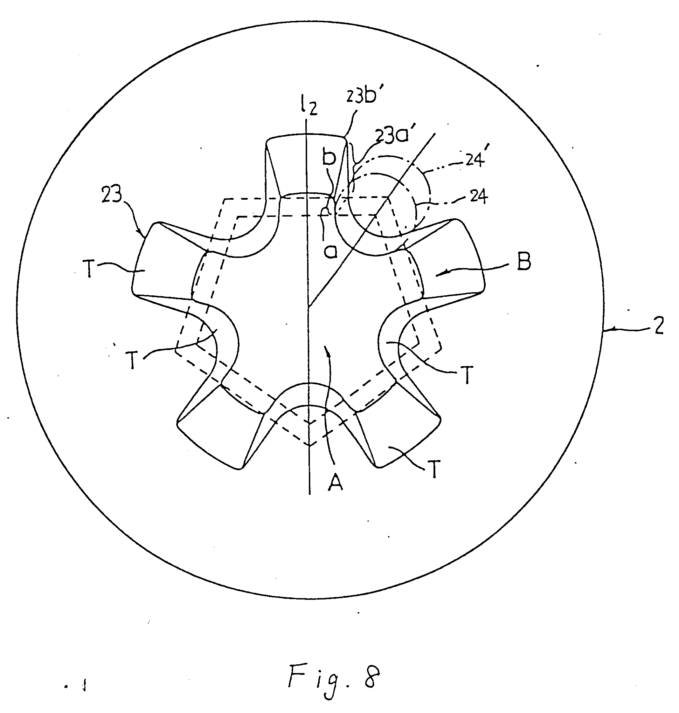

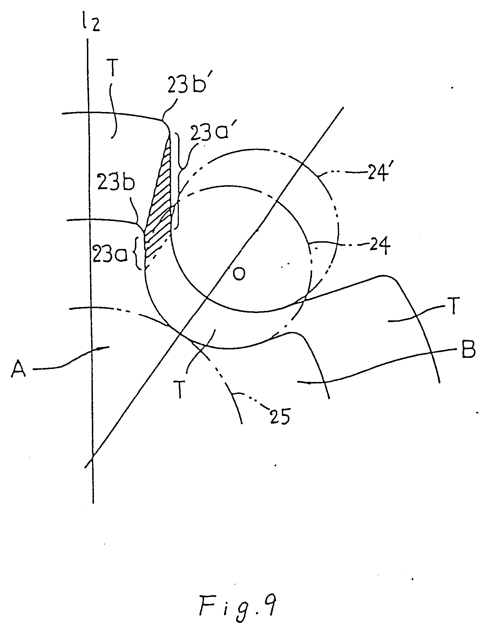

Figs. 8 and 9 show a head according to the second embodiment of the present invention. A groove 23 having five extended portions extending in radial directions from the center thereof is formed in a converted tapered configuration. Profiles of bottom and top thereof are formed in the same manner of the previously mentioned first embodiment. However, top of the groove 23 is formed with a slightly larger diameter than that of bottom except the diameter of dummy circles 24'. Diameter of the circles 24' are formed to have same diameter 24 as those on the bottom of the groove. Thus, an inner circumference of the groove 23 is shaped as an outwardly tapered surface T. This derives straight line 23a' longer than that of 23a which is formed on the bottom of the groove 23. Thus, all straight portions of the surface T of the groove taper widely.

It is also possible that the groove 23 be formed with a projection for bit engagement having the same profile (five radially extended portions). However, in this case, the projection is formed with a tapered configuration with the bottom thereof being wider.

Same jointing equipment can be used without concern for threaded fastener sizes if the groove top and the projection bottom are formed to have same diameter.

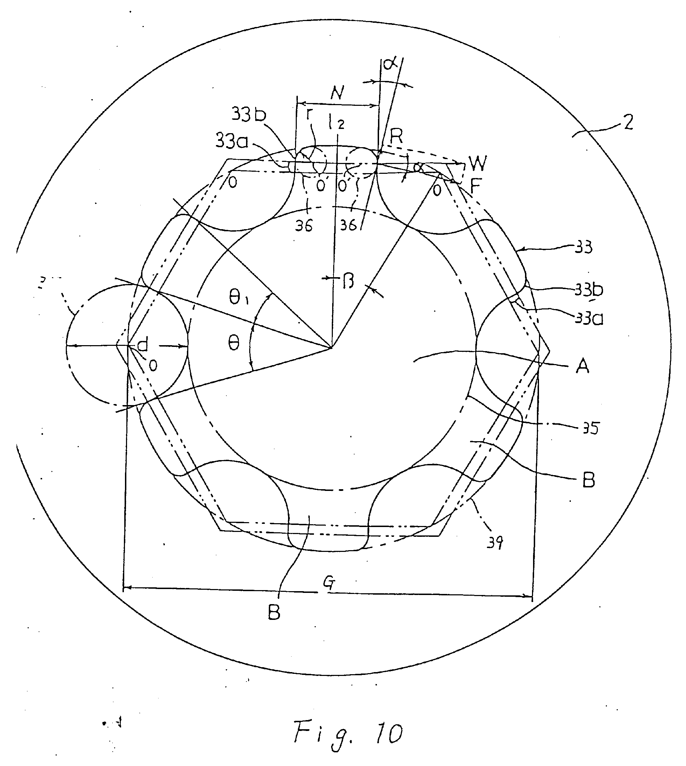

Fig. 10 shows a head having six extended portions in a groove according to the third embodiment of the present invention. The groove is formed in the same manner of the previously mentioned embodiment, and it can be also be formed with a converted tapered configuration or alternatively, tapered projection as aforementioned.

When manufacturing the threaded fastener of the present invention, a punching machine of the same profile as a desired groove is used for press-molding of the head. The head is broken by shearing force derived from the punching machine corresponding to pressure applied. Thus, a bit engaging groove can be obtained substantially along the profile of the punching machine. According to the present invention, because corners of the radial portions of the groove are formed in rounded shape, stress concentration cannot be caused at those portions, therefore, fragility of the corners does not occur.

Corresponding to rotation of the jointing equipment, torque from the jointing equipment is applied to an inner surface of the radial portions in the groove, and the threaded fastener is threaded into a threaded fastener hole. When torque is converted to rotating driving force, the force application point on the portion may fluctuate due to slight relaxing of the engagement between the jointing equipment and the groove. However, according to the present invention, a straight line is formed adjacent the force application point, thus fluctuation points are on the straight line of the surface of the portion. Therefore, driving angle α is kept substantially constant always and is kept to a relatively small value, i.e., α = 15 °. Accordingly, stable and high conversion efficiency of torque can be obtained.

Additionally, if the engaging portion of the head is formed of a converted tapered groove or tapered projection, insertion of the jointing equipment can be accomplished more easily.

While the present invention has been disclosed in terms of the preferred embodiment in order to facilitate better understanding of the invention, it should be appreciated that the invention can be embodied in various ways without depending from the principle of the invention. For example, a head having same diameter of that of a threaded shaft and helical projections (thread) on a circumference thereof can be available. Therefore, the invention should be understood to include all possible embodiments and modification to the shown embodiments which can be embodied without departing from the principle of the invention as set forth in the appended claim 1.

## Claims

1. A threaded fastener comprising:
a threaded shaft having an axis and an integral head, said integral head having a plurality of radius lines (1₂) emanating from said axis, said plurality of radius lines (1₂) being equi-angularly spaced, at an angle less than 90 , one after another about said axis;
said integral head having a center portion (A) radially extending about said axis and a plurality of radius lines (1₂), of radial, torque receiving portions radially extending outwardly from said center portion, each of said plurality of torque receiving portions radially extending about the corresponding one of said plurality of radius lines (1₂);
said center portion (A) being defined by a first circle (15) having a center on said axis;
each of said torque receiving portions (B) being partly defined by the adjacent two of second circles (14) of the same diameter, said second circles (14) being in contact with said first circle (15) and equi-angularly spaced one after another, said second circles (14) having centers (0) disposed on a third circle (19) which is concentric with said first circle (15);
each of said torque receiving portions (B) being partly defined further by a pair of fourth circles (16) of the same diameter disposed between said adjacent two of said second circles (14) in contact therewith, respectively, said pair of fourth circles (16) being in contact with said third circle (19) and having centres (0');
characterised in that:
each of said torque receiving portions (B) has and is defined by a pair of straight line sections (13a) each extending from a first point on one of said second circles (14) to a second point on that one of said pair of fourth circles (16) which is in contact with said one of said second circles (14), said first and second points being spaced from one another;
said first points of said pair of straight line sections (13a) being disposed on a first line segment (17) interconnecting said centers (0) of said adjacent two of said second circles (14);
said second points of said pair of straight line sections (13a) being disposed on a second line segment (18) interconnecting said centers (0') of said pair of fourth circles (16).

2. A threaded fastener as set forth in claim 1, wherein each one of said torque receiving portions (B) is defined partly by said third circle (19).

3. A threaded fastener as set forth in claim 2, wherein each of said pair of fourth circles (16) has a radius (r), said second points on said second line (18) interconnecting said centers (0') of said fourth circles (16) are spaced by a distance (N) (wherein N is the width of each of said torque receiving portions), said third circle (19) has a diameter (G), the adjacent two of said radius lines (1₂) are angularly distant by two times an angle β.

4. A threaded fastener as set forth in claim 3, wherein said radius (r) of each of said pair of fourth circles (16) is defined by:$\text{N/8 ≦ r < G/2 x (1 -cosβ)}$

5. A threaded fastener as set forth in any preceding claim in which said center portion (A) and said torque receiving portions (B) radially extending therefrom form a projection in said integral head.

6. A threaded fastener as set forth in any of claims 1 to 4 in which said center portion (A) and said torque receiving portions (B) radially extending therefrom form a recess in said integral head.

## Patentansprüche

1. Ein Befestigungselement mit Gewinde, bei welchem:
ein Gewindeschaft eine Achse und einen integralen Kopf aufweist, wobei der genannte integrale Kopf eine Vielzahl von von der genannten Achse ausgehender Radiuslinien (l₂) hat und die genannte Vielzahl von Radiuslinien (l₂) unter gleichen Winkeln, mit einem Winkel kleiner als 90°, eine nach der anderen um die genannte Achse beabstandet sind;
der genannte integrale Kopf ein sich radial um die genannte Achse erstreckenden Mittelstück (A) und eine Vielzahl von Radiuslinien (l₂) und von radialen Drehmoment aufnehmenden Teilen , die sich von dem genannten Mittelstück radial nach außen erstrecken, aufweist, wobei sich aus der genannten Vielzahl von Drehmoment aufnehmenden Teilen jedes radial über die korrespondierende aus der genannten Vielzahl von Radiuslinien (l₂) erstreckt;
das genannten Mittelstück (A) durch einen ersten Kreis (15) mit einem Zentrum auf der genannten Achse festgelegt ist;
jedes der genannten Drehmoment aufnehmenden Teile (B) zum Teil festgelegt ist durch die angrenzenden beiden der zweiten Kreise (14) gleichen Durchmessers, wobei die genannten zweiten Kreise (14) in Kontakt mit dem genannten ersten Kreis (15) und unter gleichen Winkeln einer nach dem anderen beabstandet sind und die Zentren (0) der genannten zweiten Kreise (14) auf einem dritten Kreis (19), der konzentrisch zu dem genannten ersten Kreis (15) ist, angeordnet sind;
jedes der genannten Drehmoment aufnehmenden Teile (B) zum Teil festgelegt ist weiter durch ein Paar vierter Kreise (16) gleichen Durchmessers, die jeweils zwischen den genannten, angrenzenden beiden der genannten zweiten Kreise (14) damit in Kontakt angeordnet sind, und das genannte Paar vierter Kreise (16) mit dem genannten dritten Kreis (19) in Kontakt ist und Zentren (0') hat;
dadurch gekennzeichnet daß:
jedes der genannten Drehmoment aufnehmenden Teile (B) mit einem Paar Gerad-Linien Sektionen (13a) versehen und durch dieses definiert ist, von denen sich jede von einem ersten Punkt auf einem der genannten zweiten Kreise (14) zu einem zweiten Punkt auf dem einen des genannten Paars vierter Kreise (16), der mit dem genannten einen der genannten zweiten Kreise (14) in Kontakt ist, erstreckt, wobei die genannten ersten und zweiten Punkte voneinander beabstandet sind;
die genannten ersten Punkte des genannten Paars von Gerad-Linien Sektionen (13a) auf einem ersten Linien-Segment (17), die genannten Zentren (0) der genannten, angrenzenden beiden der genannten zweiten Kreise (14) miteinander verbindend, angeordnet sind;
die genannten zweiten Punkte des genannten Paars von Gerad-Linien Sektionen (13a) auf einem zweiten Linien-Segment (18), die genannten Zentren (0') des genannten Paars der vierten Kreise (16) miteinander verbindend, angeordnet sind.

2. Ein Befestigungselement mit Gewinde nach Anspruch 1, worin jedes der genannten Drehmoment aufnehmenden Teile (B) zum Teil durch den genannten dritten Kreis (19) festgelegt ist.

3. Ein Befestigungselement mit Gewinde nach Anspruch 2, worin jedes der genannten Paare vierter Kreise (16) einen Radius (r) hat, die genannten zweiten Punkte auf der genannten, die genannten Zentren (0') der genannten vierten Kreise (16) miteinander verbindenden, zweiten Linie (18) beabstandet sind durch einen Entfernung (N) (worin N die Breite von jedem der genannten Drehmoment aufnehmenden Teile ist), und der genannte dritte Kreis (19) einen Durchmesser (G) hat und die angrenzenden beiden der genannten Radiuslinien (l₂) winkelmäßig um das Zweifache eines Winkels β entfernt sind.

4. Ein Befestigungselement mit Gewinde nach Anspruch 3, worin der genannte Radius (r) von jedem der genannten Paare vierter Kreise (16) festgelegt ist durch:$\text{N/8 ≦ r < G/2·(1-cosβ)}$

5. Ein Befestigungselement mit Gewinde nach irgendelnem der vorhergehenden Ansprüche, in dem das genannte Mittelstück (A) und die genannten Drehmoment aufnehmenden Teile (B), die sich davon radial erstrecken, auf dem genannten integralen Kopf einen Vorsprung bilden.

6. Ein Befestigungselement mit Gewinde nach irgendeinem der Ansprüche 1 bis 4, in dem das genannte Mittelstück (A) und die genannten Drehmoment aufnehmenden Teile (B), die sich davon radial erstrecken, in dem genannten integralen Kopf eine Vertiefung bilden.

## Revendications

1. Elément de fixation à filet comprenant:
un arbre fileté possédant un axe et une tête venue de matière, ladite tête venue de matière possédant une pluralité de lignes de rayon (l₂) partant dudit axe, ladite pluralité de lignes de rayon (l₂) étant espacées équi-angulairement, suivant un angle inférieur à 90°, l'une après l'autre autour dudit axe;
ladite tête venue de matière possédant une portion centrale (A) s'étendant radialement autour dudit axe et une pluralité de lignes de rayon (l₂) de portions radiales recevant le couple s'étendant radialement vers l'extérieur depuis ladite portion centrale, chacune de ladite pluralité des portions recevant le couple s'étendant radialement autour de la ligne correspondante de ladite pluralité de lignes de rayon (l₂);
ladite portion centrale (A) étant définie par un premier cercle (15) possédant un centre sur ledit axe;
chacune desdites portions recevant le couple (B) étant définie partiellement par deux cercles adjacents de deuxièmes cercle (14) du même diamètre, lesdits deuxièmes cercles (14) étant en contact avec ledit premier cercle (15) et espacé équi-angulairement l'un après l'autre, lesdits deuxièmes cercles (14) possédant des centres (0) disposés sur un troisième cercle (19) qui est concentrique avec ledit premier cercle (15);
chacune desdites portions recevant le couple B étant définie partiellement en outre par une paire de quatrièmes cercles (16) du même diamètre disposés entre lesdits deux cercles adjacents desdits deuxièmes cercles (14) en contact avec ceux-ci, respectivement, ladite paire de quatrièmes cercles (16) étant en contact avec ledit troisième cercle (19) et possédant des centres (0');
caractérisé en ce que:
chacune desdites portions recevant le couple (B) possède et est défini par une paire de sections de ligne droite (13a) s'étendant chacune depuis un premier point sur l'un desdits deuxièmes cercles (14) à une deuxième point sur l'un de ladite paire de quatrièmes cercles (16) qui est en contact avec l'un desdits deuxième cercles (14), lesdits premiers et deuxièmes points étant espacés l'un de l'autre;
lesdits premiers points de ladite paire de sections de ligne droite (13a) étant disposés sur un premier segment de lignes (17) interconnectant lesdits centres (0) desdits deux cercles adjacents desdits deuxièmes cercles (14);
lesdits deuxièmes points de ladite paire de sections de ligne (13a) étant disposés sur un deuxième segment de ligne (18) interconnectant lesdits centres (0') de ladite paire de quatrièmes cercle (16).

2. Elément de fixation à filet selon la revendication 1, dans lequel chacune desdites portions recevant le couple (B) est définie partiellement par ledit troisième cercle (19).

3. Elément de fixation à filet selon la revendication 2, dans lequel chacune de ladite paire de quatrièmes cercles (16) possède un rayon (r), lesdits deuxièmes points sur ladite deuxième ligne (18) interconnectant lesdits centres (0') desdits quatrième cercles (16) sont espacés d'une distance (N) (dans laquelle N représente la largeur de chacune desdites portions recevant le couple), ledit troisième cercle (19) a un diamètre (G), les deux lignes adjacentes desdites lignes de rayon (l₂) se trouvant à une distance angulaire correspondant à deux fois l'angle β.

4. Elément de fixation à filet selon la revendication 3, dans lequel ledit rayon (r) de chacune de ladite paire de quatrièmes cercles (16) est défini par:$\text{N/8 ≦ r < G/2 x (1-cosβ)}$

5. Elément de fixation à filet selon l'une des revendications précédentes, dans lequel ladite portion centrale (A) et lesdites portions recevant le couple (B) s'étendant radialement de celle-ci forment une saillie dans ladite tête intégrale.

6. Elément de fixation à filet selon l'une des revendications 1 à 4, dans lequel ladite portion centrale (A) et lesdites portions recevant le couple (B) s'étendant radialement de celle-ci forment un évidement dans ladite tête intégrale.
